# EUROPÄISCHE PATENTSCHRIFT

(11) **EP 2 085 840 B1**
(45) Veröffentlichungstag und Bekanntmachung des Hinweises auf die Patenterteilung: **17.08.2016**
(21) Anmeldenummer: 08022452.0
(22) Anmeldetag: 24.12.2008
(51) Int. Cl.: G05B 19/042, G05B 19/05

(54) **Verfahren zum Programmieren einer Steuerungseinrichtung**
Method for programming a control device
Procédé destiné à la programmation d'un dispositif de commande

(30) Priorität: 01.02.2008 DE 102008007102
(43) Veröffentlichungstag der Anmeldung: 05.08.2009
(73) Patentinhaber: Robert Bosch GmbH, 70469 Stuttgart (DE)
(72) Erfinder: Landgraf, Günther, 97753 Karlstadt (DE)
(74) Vertreter: Schuhbießer, Irmgard Gertrud

(56) Entgegenhaltungen:
- EP-A2- 1 221 638
- EP-A2- 1 380 908
- US-A1- 2004 083 456
- US-A1- 2006 259 500
- ROBERT W. BRENNAN: "Toward Real-Time Distributed Intelligent Control: A Survey of Research Themes and Applications", IEEE TRANSACTIONS ON SYSTEMS, MAN, AND CYBERNETICS, PART C (APPLICATIONS AND REVIEWS), Bd. 37, Nr. 5, 1. September 2007 (2007-09-01), Seiten 744-765, XP55042431, ISSN: 1094-6977, DOI: 10.1109/TSMCC.2007.900670

## Beschreibung

Die vorliegende Erfindung bezieht sich auf ein Verfahren zum Programmieren einer Steuerungseinrichtung. Diese Steuerungseinrichtung wird dabei insbesondere in Werkzeugmaschinen, Druckmaschinen, Bearbeitungsmaschinen und dergleichen eingesetzt.

Bei der Inbetriebnahme derartiger Arbeits- oder Werkzeugmaschinen ist es üblicherweise erforderlich, deren Steuerungseinrichtungen anwendungsspezifisch (entsprechend den jeweiligen Anforderungen) zu programmieren. Dabei ist es aus dem Stand der Technik bekannt, dass für diese Programmierung erforderliche Komponenten aus Bibliotheken auf den verschiedensten Speichermedien sowie über das Internet von einem Server geladen werden. Anschließend werden die betreffenden Komponenten (unter Umständen über einen temporären Speicher) in die Bibliothek einer Engineering-Umgebung importiert. Dort werden sie in das vorhandene Engineering-Projekt integriert und an die Steuerung übergeben.

US 2006/0259500 A1 beschreibt eine Bibliothek, die modifizierbare Objekte für Industrieautomation aufweist. Auf die Bibliothek kann über das Internet zugegriffen werden.

EP 1 380 908 A2 offenbart ein System zur automatischen Konfiguration von Steuerungssoftware für eine Erstinbetriebnahme einer Maschine.

Die Integration zusätzlicher Funktionalität bzw. zusätzlicher Komponenten in ein vorhandenes Projekt bedarf vieler Bedienhandlungen, ist zeitaufwendig und muss durch den Benutzer in einer genau vorgegebenen Reihenfolge durchgeführt werden. Des Weiteren sind hierbei die der Engineering-Umgebung sowie der Steuerung eigenen Mechanismen und Randbedingungen zu berücksichtigen. Beispielsweise die Bedienschritte zum Öffnen eines Programmeditors in der Engineering-Umgebung oder beispielsweise das Aktivieren von geänderten Maschinenparametern innerhalb des Steuerungssystems.

Zur Integration der Komponenten ist hohes steuerungsspezifisches Know-how erforderlich und der Benutzer muss mit den erforderlichen Werkzeugen (wie z.B. SPS-Programmeditor oder NC-Maschinenparametereingabe) vertraut sein, um eine rasche Einbindung der Komponente in die Steuerung zu erreichen. Weiterhin müssen die spezifischen Randbedingungen für die jeweilige Arbeitsmaschine bekannt sein (z.B. maximaler Verfahrbereich der Achsen). Dabei besteht oftmals das Problem, dass die zur Verfügung stehenden Dokumentations- und Handlungsanweisungen nicht aktuell sind.

Der vorliegenden Erfindung liegt daher die Aufgabe zugrunde, ein Verfahren zur Verfügung zu stellen, welches die Integration von Komponenten in eine Steuerung erleichtert. Dies wird durch den Gegenstand von Anspruch 1 erreicht. Vorteilhafte Ausführungsformen und Weiterbildungen sind Gegenstand der Unteransprüche.

Bei einem erfindungsgemäßen Verfahren zum Programmieren einer Steuerungseinrichtung für eine Maschine werden in einem ersten Schritt zur Programmierung der Steuerungseinrichtung benötigte Komponenten beschafft, wobei jede Komponente aus einer Datensammlung abgerufen wird. In einem weiteren Verfahrensschritt wird die Komponente in einer Speichereinrichtung abgelegt und in einem weiteren Verfahrensschritt bearbeitet. Schließlich wird die bearbeitete Komponente in der Steuerungseinrichtung abgelegt. Erfindungsgemäß wird die Komponente über das Internet aus einer Datensammlung abgerufen und werden für diese Komponente und für die Bearbeitung der Komponente charakteristische Anweisungen an einen Benutzer ausgegeben, wobei auch diese Anweisungen vorzugsweise über das Internet abrufbar sind, wie in Anspruch 1 beschrieben. Während also im Stand der Technik der Benutzer die Systemkonfiguration sehr genau kennen muss und, um zeiteffizient zu arbeiten, einen genauen Überblick über die Engineering-Umgebung und dem Steuerungssystem haben muss, wird ihm bei dem erfindungsgemäßen Verfahren bevorzugt mit der Komponente eine Arbeitsanweisung ausgegeben. In dieser Arbeitsanweisung (im Folgenden auch als Handlungsanweisung bezeichnet) sind detailliert die Schritte dargestellt, die der Benutzer durchführen muss, um die betreffende Komponente erfolgreich in das Projekt der Engineering-Umgebung bzw. in die Steuerungseinrichtung zu integrieren. Damit wird durch die Erfindung insbesondere die Inbetriebnahme von Steuerungssystemen vereinfacht, denn es wird erfindungsgemäß eine automatisierte Integration von Komponenten in die Steuerung erreicht. Genauer gesagt, werden die erforderlichen Handlungsschritte für die Integration von der Komponente bevorzugt unter Verwendung geeigneter Hilfsmittel, wie insbesondere der Internettechnologie oder von Skripten, sowie einer steuerungsseitigen Automatisierungs-Schnittstelle durchgeführt. Auf diese Weise kann auch ein Benutzer, der nicht das spezielle steuerungsspezifische Know-how besitzt, anhand der Anweisungen bequem eine entsprechende Komponente in eine Steuerungseinrichtung integrieren. Diese erhöht insgesamt die Handhabbarkeit einer Steuerungseinrichtung, da der Benutzer insbesondere über das Internet in einfacher Weise nicht nur die betreffende Komponente selbst, sondern auch eine Anleitung zu deren Integration in die Steuerung erhält.

Bei einem bevorzugten Verfahren werden die Anweisungen als schrittweise Anweisungen ausgegeben. Damit wird insbesondere einem Benutzer schrittweise mitgeteilt, welcher Schritt als nächstes bei der Integration der Komponente in die Steuerungseinrichtung durchzuführen ist. Weiterhin werden bevorzugt Informationen über bereits abgearbeitete Schritte ausgegeben. Bei diesen schrittweisen Anweisungen werden bevorzugt bereits durchgeführte Schritte registriert.

Erfindungsgemäß werden dem Benutzer für die Bearbeitung der Komponente geeignete Hilfsprogramme zur Verfügung gestellt. Bei diesen Hilfsprogrammen kann es sich beispielsweise um Plug-Ins, Bibliotheken oder Skripte handeln, welche eine Bearbeitung der Komponente durchführen.

Bei einem weiteren bevorzugten Verfahren setzt wenigstens eine Komponente eine manuelle Eingabe eines Benutzers in wenigstens einem Steuerungsbefehl für die Maschine um. Bei einer solchen Komponente handelt es sich beispielsweise um ein so genanntes Handrad (engl. handwheel), welches später einer Eingabe des Maschinenbediener in die Maschine einen entsprechenden Steuerbefehl für die Maschinensteuerung zuordnet. Beispielsweise wird durch Drehen des an der Maschine montierten Handrads eine (durch den Bediener selektierbare) Achse µm-genau innerhalb der Maschine positioniert.

Vorzugsweise wird für jede Komponente wenigstens eine Anweisung zur Verfügung gestellt. Dies bedeutet, dass es für jede Komponente möglich ist, diese auf Grundlage einer speziell für diese angepasste Anweisung zu integrieren.

Bei dem erfindungsgemäßen Verfahren enthält wenigstens eine Anweisung eine Verknüpfung zu wenigstens einem Hilfsprogramm. Damit bestehen so genannte Links zwischen beispielsweise zeilenartigen Anweisungen und den jeweiligen Hilfsprogrammen, die durch sie verwendet oder aufgerufen werden können.

Bei einem weiteren bevorzugten Verfahren erfolgt die Integration der bearbeiteten Komponente in die Steuerungseinrichtung automatisch. Dies bedeutet, dass ein Hilfsprogramm vorgesehen ist, welches wenigstens teilautomatisch diejenigen Schritte durchführt, mit denen ansonsten der Benutzer die jeweiligen Hilfsprogramme oder Komponenten in die Steuerung integriert. In diesem Fall werden bevorzugt die einzelnen Anweisungen automatisch durchgeführt. Optional kann hierbei ein Wizard (Einrichtungsassistent) eingesetzt werden, über den der Benutzer applikationsspezifische Variationen vornehmen kann. Bei der Integration der Handrad-Komponente könnte dies beispielsweise die Vorgabe der maximalen Geschwindigkeit bei aktivem Handrad sein.

Bei einem weiteren bevorzugten Verfahren werden die Anweisungen über eine weitere Datenbank zur Verfügung gestellt.
Dabei kann es sich um eine weitere über das Internet zugängliche Datenbank handeln, es wäre jedoch auch möglich, dass diese Datenbank auf einem Datenträger wie einer Festplatte oder einer CD-ROM bzw. einem Intranet oder dergleichen zur Verfügung steht.

Weitere Vorteile und Ausführungsformen ergeben sich aus den beigefügten Zeichnungen:
Darin zeigen:
   - Fig. 1: eine blockdiagrammartige Darstellung zur Veranschaulichung des Standes der Technik;
   - Fig. 2: eine blockdiagrammartige Darstellung zur Veranschaulichung der Erfindung (Komponenten (und Scripte) werden via Internet von Hand in die Bibliothek (der Engineering-Umgebung) geladen; Skripte führen einzelne Handlungsschritte automatisch durch;)
   - Fig. 3: einen Ausschnitt aus einer Handlungsanweisung im HTML-Format; und
   - Fig. 4: eine weitere blockdiagrammartige Darstellung zur Veranschaulichung der Erfindung (Komponenten (und Skripte) werden via Internet automatisch in die Bibliothek (der Engineering-Umgebung) geladen; Skripte führen Handlungsschritte automatisch durch.)

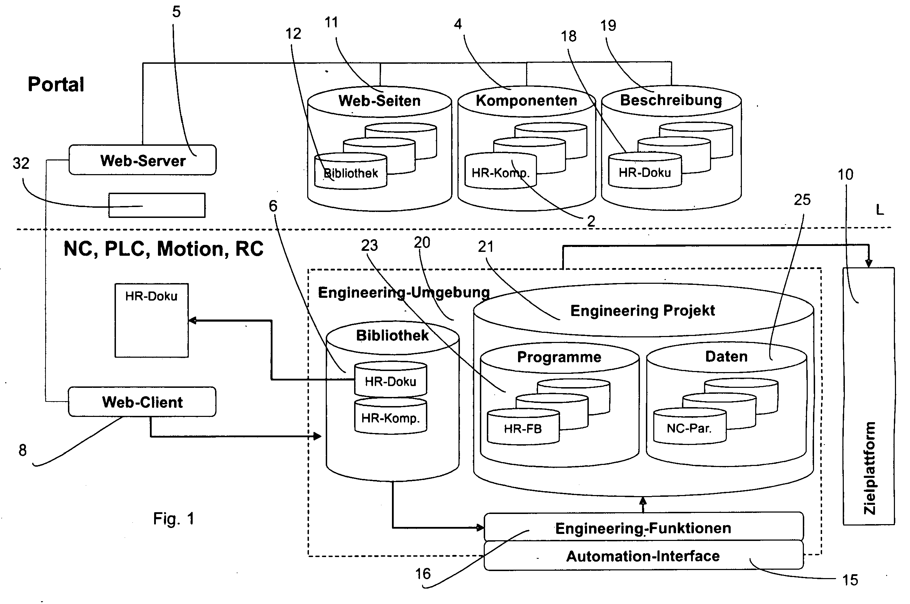

Figur 1 (Aktueller Stand der Technik) zeigt eine blockdiagrammartige Darstellung zur Veranschaulichung der dem aktuellen Stand der Technik zugrunde liegenden Prinzipien. Dabei kann ein Anwender mittels eines Standard-Webbrowsers die Web-Seiten eines Portals aufrufen und zu den gewünschten Komponenten navigieren, wie etwa einer Handrad-Komponente, und diese (für deren Implementierung in ein bereits vorhandenes Steuerungsprojekt) in einen temporären Speicher ablegen und von dort aus in die Bibliothek einer Engineering-Umgebung importieren. Bei einer anderen Lösung werden die erforderlichen Komponenten direkt in die Bibliothek 6 der Engineering-Umgebung 20 abgelegt. Nach dem Befüllen der Bibliothek 6 der Engineering-Umgebung 20 kann der Anwender die betreffenden Komponenten unter Berücksichtigung der vorhandenen Mechanismen und Randbedingungen der Engineering-Umgebung sowie der applikationsspezfischen Erfordernissen (wie etwa die maximale Beschleunigung, Geschwindigkeit oder Verfahrweg einer Achse) in das vorhandene Projekt integrieren und nach erfolgreicher Integration für den weiteren Fortgang der Maschineninbetriebnahme in die Zielplattform übertragen.

In der Figuren 1, 3 und 4 bezieht sich die Bezeichnung HR-Komp. auf Handrad-Komponenten, die Bezeichnung HR-Doku auf die Handrad-Dokumentation, bei welcher es sich insbesondere um eine Inbetriebnahme-Handlungsanweisung für die betreffende Komponente handelt, die Bezeichnung HR-FB auf einen Handrad Funktionsbaustein (bzw. SPS-Funktionsbaustein) und die Bezeichnung, NC-Par. auf NC- Parameter. Mit Hilfe der mitgeführten NC-Parameter werden NC-spezifische Parameter, wie der maximale Achsverfahrweg, die maximale Achsgeschwindigkeit oder die maximale Achsbeschleunigung mit geführt.

Dabei werden die Komponenten (Programme und Daten) über das Internet in eine Speichereinrichtung 6, genauer eine Bibliothek 6 geladen. Bei dieser Ausführungsform befindet sich diese Speichereinrichtung 6 in der Engineering-Umgebung 20 des zu erstellenden Projektes, das schließlich in eine Steuereinrichtung 10 geladen werden soll. Das Bezugszeichen 11 bezieht sich auf Webseiten, von denen die Komponenten 12, d. h. in diesem Fall Komponenten aus einer Bibliotheken 12 herunter geladen werden können. Ähnlich können einzelne Komponenten 2 aus Datensammlungen 4 von Komponenten 2 über das Internet unter Verwendung eines Netzservers 5 herunter geladen werden. Die durchgezogene horizontale Linie L veranschaulicht die Trennung zwischen dem Internetbereich und dem Bereich der Nutzeranwendung. Ein Nutzer 8 wählt zunächst bestimmte Komponenten 2 in einer Bibliothek 12 aus und lädt diese in die Speichereinrichtung bzw. Bibliothek 6 seiner eigenen Engineering-Umgebung 20, wobei diese Engineering-Umgebung 20 bereits auf der Steuerung 10 angeordnet sein kann. Damit werden die Komponenten 2 in der Speichereinrichtung 6 zumindest zwischengespeichert.

Anschließend werden die Komponenten über vorgegebene Funktionen 16 in das Steuerungsprojekt 21 geladen. Daneben sind in diesem Steuerungsprojekt 21 eine Vielzahl von Programmen 23 sowie Daten 25 abgespeichert. Bei diesen Daten 25 kann es sich beispielsweise um Parametersätze für die Steuerung handeln.

Nachdem alle Handlungsschritte durchgeführt wurden, sind die jeweiligen Komponenten 2, Daten und Programme der Komponente 2 in die Steuerungsumgebung 21 integriert und können schließlich auf die Zielplattform bzw. die Steuerung 10 (in Form einer Softsteuerung oder spezifischen Hardware) übertragen werden. Bei der Komponente 2 kann es sich bei den in Figur 1 gezeigten Beispiel um ein so genanntes Handrad 2 handeln, d. h. eine Komponente 2, welche eine Verbindung zwischen Betätigungselementen einer Maschine und dazugehörigen Steuervorgängen erzeugt.

Zum Herunterladen der einzelnen Komponenten 2 aus dem Internet können Standard-Web-Browser 13 eingesetzt werden. Vorzugsweise sind die betreffenden Zugänge passwortgeschützt, so dass nur bestimmte Benutzer die benötigten Komponenten 2 für ihre Steuerungseinrichtungen herunterladen können.

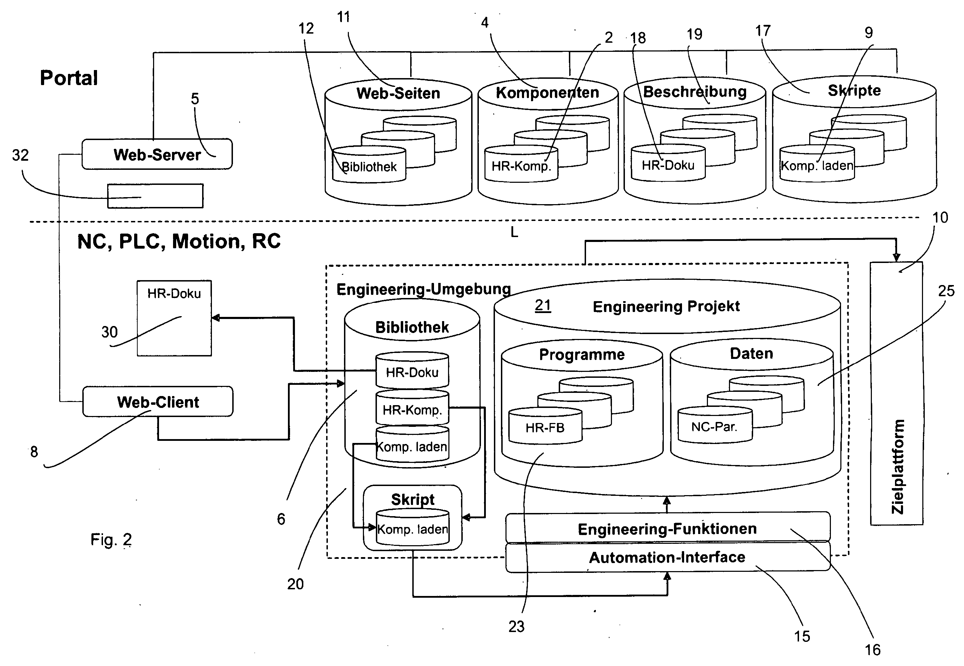

Figur 2 zeigt eine Darstellung eines bevorzugten Verfahrens.
Hier kann der Anwender ebenfalls mittels eines Standard-Webbrowsers die Web-Seiten 11 eines Portals aufrufen und zu den gewünschten Komponenten 2 navigieren, wie etwa einer Handrad-Komponente 2. Im Gegensatz zur Figur 1 sind hier für die einzelnen Komponenten und Teilkomponenten zusätzlich noch Handlungsanweisungen 30 (eine spezielle Dokumentationsform, in der die einzelnen durchzuführenden Handlungen Schritt für Schritt detailliert beschreiben werden) und Skripte 9 (bevorzugt in einer Datensammlung 17) mit abgelegt. Optional können für die einzelnen Komponenten und deren Teilkomponenten weitere Informationen, wie Programme, Grafiken, Videos, etc. mitgeführt werden. Nach Auswahl einer Komponente 2, 12 können alle ihre Daten in der gleichen Weise, wie oben gezeigt in einen temporären Speicher übertragen und von dort aus in die Bibliothek 6 einer Engineering-Umgebung 20 importiert werden bzw. direkt in die Bibliothek 6 der Engineering-Umgebung 20 abgelegt werden.

Nach dem Befüllen der Bibliothek 6 der Engineering-Umgebung 20 kann der Anwender in einfacher Weise (ohne tiefere Kenntnisse der Engineering-Umgebung sowie des Steuerungssystems) die betreffenden Komponenten gemäß den vorgegebenen Handlungsanweisungen manuell unter Berücksichtigung der applikationsspezfischen Erfordernissen in das vorhandene Projekt 21 (Programme 23 und Daten 25) integrieren und nach erfolgreicher Integration für den weiteren Fortgang der Maschineninbetriebnahme in die Zielplattform 10 übertragen.

Erfindungsgemäß besteht jedoch auch die Möglichkeit unter Verwendung der in den Handlungsanweisungen 30 integrierten Links zu den Skripten 9, die Skripte 9 zu starten und damit die einzelnen Arbeitsschritte automatisiert durchzuführen. Hier besteht auch die Möglichkeit mittels Wizards dem Anwender applikationsspezifische Eingaben zu ermöglichen, beispielsweise die Bewertung eines Inkrements für einen Handrad-Funktionsbaustein.

Zusätzlich zu dem in Figur 1 gezeigten Verfahren werden hier sowohl Komponenten 2 als auch Skripte 9 über das Internet in die Bibliothek bzw. Speichereinrichtung 6 der Engineering-Umgebung 20 geladen. Diese Skripte 9, die ebenfalls über eine Plattform 17 abrufbar sind, führen die Handlungsschritte der Handlungsanweisung 30 automatisch durch. Dies ist im unteren Teil von Figur 2 veranschaulicht, in dem dargestellt ist, dass der Nutzer 8 auf die einzelnen Skripte 9 zugreift und umgekehrt diese Skripte 9 in ein Automatisierungsmodul 15 geladen werden.

Das Bezugszeichen 30 zeigt schematisch eine Handlungsanweisung für das Abspeichern der einzelnen Komponenten 2. Anhand dieser Handlungsanweisung 30 führt der Nutzer 8 die für die Integration der Komponente 2 erforderlichen Schritte vorzugsweise der Reihe nach durch. Daneben können in diesem Schritt auch etwa Randbedingungen für die einzelnen Komponenten 2 angegeben werden, wobei sich derartige Randbedingungen aus dem späteren Einsatz der Komponente bzw. dem Einsatz der Maschine in ihrer Gesamtheit ergeben können.

Auch bei diesem Verfahren wird zunächst eine Komponente 2, bevorzugt einschließlich aller zugehörigen Unterkomponenten in die Bibliothek 6 der Engineering-Umgebung 20 geladen. Es wäre jedoch auch möglich das die gesamte Komponentenbibliothek bereits in der Engineering-Umgebung gefüllt ist und nur bei Bedarf über das Internet aktualisiert wird. Diese Bibliothek 6 kann bei dieser und auch bei der oben gezeigten Ausführungsform optional auch außerhalb der Engineering-Umgebung 20 liegen. Weiterhin werden hier auch die Skripte 9 aus dem Internet herunter geladen. Es wäre jedoch auch möglich, dass die jeweiligen Skripte bereits in hierfür vorgesehenen Ordnern auf der Steuerung vorinstalliert sind und nur bei Bedarf über das Internet aktualisiert werden.

Bei dem in Figur 2 gezeigten Ablauf führt der Nutzer 8 die erforderlichen Schritte der Reihe nach manuell durch. Es ist jedoch hier auch möglich, dass der Benutzer über vorzugsweise in den einzelnen Handlungsschritten der Anweisungen 30 hinterlegte Links die in bestimmten Ordnern bereits hinterlegten Skripte 9 startet.

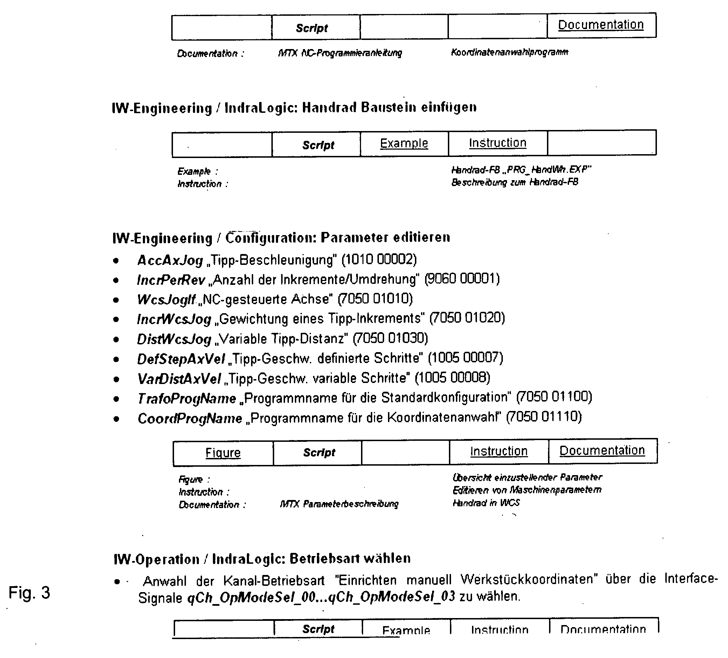

Figur 3 zeigt beispielhaft einen Ausschnitt einer Handlungsanweisung für die Inbetriebnahme eines Handrads an einer Werkzeugmaschine. (Mit Hilfe einer solchen Handradkomponente können dann die einzelnen Achsen einer Werkzeugmaschine durch Drehen am Handrad µm-genau bewegt werden.)

Zu Beginn einer solchen Handlungsanweisung wird zunächst kurz beschrieben um welchen Inbetriebnahmeteil es sich handelt. Danach folgt für jeden durchzuführenden Schritt zunächst die Beantwortung der Frage "Wo muss ich innerhalb der Engineering-Umgebung agieren" und" Was wird in diesem Arbeitsschritt getan". Beispielhaft erläutert seien hier die Arbeitsschritte "Handrad-Funktionsbaustein einfügen" und "Parameter editieren". Die erste Überschrift fordert den Anwender auf, innerhalb der Engineering-Umgebung den SPS-Programm-Editor zu öffnen und den Handradbaustein einzufügen. Anwender, die bisher noch keinen SPS-Funktionsbausteins in ein vorhandenes SPS-Programm eingefügt haben, können sich unter dem Link "Instruction" die Handlungsanweisung zur Integration eines SPS-Funktionsbausteins ansehen und entsprechend die einzelnen Inbetriebnahmeschritte in der vorgegebenen Weise durchführen. Unter dem Link "Example" kann der Anwender bei Bedarf sich auch eine beispielhafte Integration eines SPS-Bausteins ansehen, beispielsweise in Form eines Kurzvideos. Mit Hilfe des Links "Script" steht dem Anwender auch eine weitestgehend automatisierte Integration des SPS-Funktionsbausteins zur Verfügung, wobei das Skript in diesem Fall dem Anwender einige applikationsspezifische Eingaben (in Form eines Wizards) abverlangt, wie etwa in welchen Programmteil der Funktionsbaustein zu integrieren ist, auf welche NC-Achse der Baustein wirken soll oder etwa die Bewertung der über das Handrad vorgegebenen Inkremente in Bezug zur auszuführenden Bewegung bzw. Geschwindigkeit.
Die zweite Überschrift "IW-Engineering / Configuration editieren" besagt, dass der Anwender innerhalb der Engineering-Umgebung den Maschinenparametereditor öffnen und die nachstehend aufgelisteten Parameter für die Inbetriebnahme eines Handrads editieren soll. So muss beispielsweise mit Hilfe des Parameters "Tipp-Beschleunigung" (Parameter-ID: AccAxJog; Parameter-Nummer: 1010 00002) das Beschleunigungsverhalten der betreffenden Achsen im Tippbetrieb mit Handrad definiert werden. Hier stehen dem Anwender die Links "Figure" zur Anzeige eines Bildes, "Instruction" zur Anzeige der einzelnen Arbeitsschritte, "Documentation" zur Anzeige der Parameterbeschreibung und insbesondere "Script" zur Verfügung. Der Link "Script" führt den Anwender innerhalb des Parametereditors zu den jeweils relevanten Parametern. Eine andere Alternative wäre dass das Skript einen Wizard einblendet, der die erforderlichen Parameterwerte abfragt und diese an die Parameterdatenbasis überträgt.

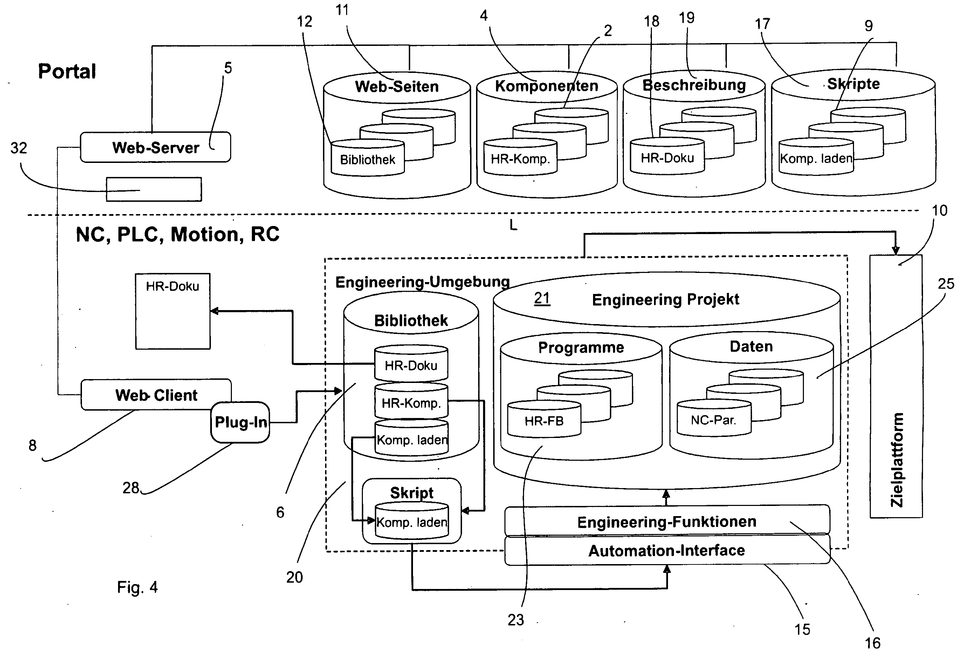

Figur 4 zeigt eine weitergehend automatisierte Variante zur Veranschaulichung des erfindungsgemäßen Verfahrens. Dabei werden die Komponenten 2 (und Skripte 9) via Internet in die Bibliothek 6 (der Engineering - Umgebung 20) geladen und Skripte 9 führen Handlungsschritte automatisch durch.

In der gleichen Weise wie in Figur 2 kann der Anwender mittels eines Standard-Webbrowsers die Web-Seiten eines Portals aufrufen und zu den gewünschten Komponenten navigieren. Unter Verwendung eines Plug-Ins 28 (eines ausführbaren Programms) im Web-Client 8 werden bei Auswahl einer Komponente alle der Komponente (sowie der Teilkomponenten) zugehörigen Daten, Programme, Skripte und Dokumente, Grafiken, Videos, Handlungsanweisungen, etc. (beispielsweise unter Verwendung der Portal-seitigen Web-Services) in die Bibliothek 6 der Engineering-Umgebung 20 geladen. Optional könnte das Plug-In 28 auch überprüfen, ob die gewählte Komponente und deren Unterkomponenten bereits in der Bibliothek der Engineering-Umgebung vorhanden sind bzw. ob alle für die Integration der Komponente erforderlichen Daten, Programme und Skripte, gegebenenfalls auch deren Dokumente, Grafiken und Videos, Handlungsanweisungen etc. in der Bibliothek bereits vorhanden sind, und erforderlichenfalls nur noch die fehlenden Daten nachladen. Denkbar wäre auch das die Skripte und alle übrigen Daten und Information bereits in der Bibliothek der Engineering-Umgebung abgelegt sind und nur noch hinsichtlich einer aktuelleren Version überprüft werden.

Nach dem Download der erforderlichen Komponenten in die Bibliothek 6 der Engineering-Umgebung 20 startet das Plug-In 28 oder der Anwender innerhalb der Engineering-Umgebung 20 das der Komponente zugehörige Skript 9, das die für die zughörigen Teilkomponenten zugehörigen Skripte startet und diese wiederum die Skripte der einzelnen Handlungsschritte (in der gleichen Reihenfolge, wie in den Handlungsanweisungen (s. Figur 3) beschrieben). Denkbar ist auch ein Mischbetrieb bei der der Anwender die einzelne Handlungsschritte manuell durchführt und andere wiederum mittels eines Skripts.

Die Skripte integrieren die mitgeführten Daten und Programmteile in das Engineering-Projekt unter Verwendung des Automation-Interfaces 15 (sowie der Engineering Functions 16) der Engineering-Umgebung 20.

Nach Ausführung aller Skripte sind die mitgeführten Daten 25 und Programme 23 der Komponente in die Engineering-Umgebung integriert und können ebenfalls Skript-gesteuert auf die Zielplattform 10 (Soft-Steuerung, spezifische Hardware) übertragen werden. Mittels Wizards kann die Integration von Komponenten (in der gleichen Weise wie in Figur 2 beschrieben) bedarfsorientiert durch den Anwender gesteuert werden.

Auch hier werden aus dem Internet über die Internetseiten 11 Bibliotheken 12, aus Datensammlungen 4 die einzelnen Komponenten 2 und aus Skriptendatensammlungen 17 einzelne Skripten 9 mit Hilfe von Netzdienstleistungen 32 herunter geladen. Daneben werden auch hier Handrad - Dokumentationen 18 heruntergeladen. Damit wird auch hier zunächst eine Komponente 2 ausgewählt. Anschließend wird ein Modul 28 wie beispielsweise ein Plug-In in dem Web-Browser 13 des Nutzers 8 gestartet. Dieses Plug-In 28 lädt die ausgewählte Komponente 2 sowie die hierzu erforderlichen Skripte 9 in die Engineering-Umgebung.

Weiterhin ist es auch möglich, einfache Komponenten in ein bereits bestehendes Objekt zu integrieren, wie z. B. einen SPS-Funktionsbaustein. Des Weiteren ist auch eine Integration von Programmen und Daten im Sinne einer Komponente auch außerhalb der Engineering-Umgebung 20 in der gleichen Weise denkbar.

Weiterhin können (auch als Wizards bezeichnete) Hilfsprogramme zur Verfügung stehen, die den Nutzer über den Status des jeweiligen ausgeführten Arbeitsschritts informieren. Bei Bedarf können hier den Nutzer Eingaben ermöglicht werden, und auf diese Weise vermieden werden, dass der Nutzer in die spezifischen Menüs der Engineering-Umgebung 20 (wie beispielsweise im NC-Parametereditor oder der SPS-Programmierumgebung) die nötigen Änderungen vornimmt, d. h. anstelle einer Änderung direkt in der Engineering-Umgebung wird der Nutzer aufgefordert, im Rahmen der Handlungsanweisungen diese Änderungen vorzunehmen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 2: Komponenten
- 4: Datensammlung
- 5: Netzserver / Web-Server
- 6: Speichereinrichtung, Bibliothek
- 7: Netzdienstleistungen
- 8: Web-Client
- 9: Skripte
- 10: Steuereinrichtung
- 11: Webseiten
- 12: Bibliothek (die insbesondere Komponenten enthält)
- 13: Web-Browser
- 15: Automatisierungsmodul
- 16: Engineering-Funktionen
- 17: Skripten - Datensammlung
- 18: Handrad - Dokumentation
- 19: Beschreibung
- 20: Engineering-Umgebung
- 21: Steuerungsprojekt (auch als Engineering-Projekt bezeichnet)
- 23: Programme
- 25: Daten
- 28: Modul bzw. Plug-In
- 30: Handlungsanweisung
- 32: Netzdienstleistung (Funktionalität oberhalb der Linie L)
- L: Linie

## Patentansprüche

1. Verfahren zum Programmieren einer Steuerungseinrichtung (10) für eine Maschine mit den Schritten:
- Beschaffen einer zur Programmierung der Steuerungseinrichtung (10) benötigten Komponente (2), wobei diese Komponente (2) aus einer Datensammlung (4) abgerufen wird;
- Ablegen der Komponente (2) in einer Speichereinrichtung (6)
- Bearbeiten der Komponente (2)
- Integration der bearbeiteten Komponente (2) in die Steuerungseinrichtung (10);
**dadurch gekennzeichnet, dass**
die Komponente (2) mittels des Internets aus einer Datensammlung (4) abgerufen wird und für die Integration der Komponente (2) in ein bestehendes Projekt (21), das Programme (23) und Daten (25) aufweist, mindestens eine charakteristische Handlungsanweisung (30) an den Benutzer ausgegeben wird, die für die Komponente (2) abgelegt ist und in welcher die Schritte dargestellt sind, die der Benutzer durchführen muss, um die Komponente (2) zu integrieren, wobei auch die Handlungsanweisung (30) mittels des Internets abrufbar ist,
dass die Komponente (2) nach erfolgter Integration in das Projekt (21) in die Steuereinrichtung (10) übertragen wird,
dass dem Benutzer für die Bearbeitung der Komponente (2) geeignete Hilfsprogramme in Form von Skripten (9) zur Verfügung gestellt werden, und
dass in der mindestens einen Handlungsanweisung (30) Links zu den Skripten (9) integriert sind, mit welchen die Skripte (9) startbar und damit die Schritte, die der Benutzer durchführen muss, automatisiert ausführbar sind.

2. Verfahren nach Anspruch 1,
**dadurch gekennzeichnet, dass**
für die Komponente (2) zusätzlich zu der mindestens einen Handlungsanweisung (30) die Skripte (9) als Hilfsprogramme abgelegt sind und zusammen mit der Komponente (2) ausgegeben werden, wobei die Skripte (9) die Handlungsschritte der Handlungsanweisungen (30) automatisch durchführen.

3. Verfahren nach Anspruch 1 oder 2,
**dadurch gekennzeichnet, dass**
die Komponente (2) eine manuelle Eingabe eines Benutzers in wenigstens einen Steuerungsbefehl für die Maschine umsetzt.

4. Verfahren nach wenigstens einem der vorangegangenen Ansprüche,
**dadurch gekennzeichnet, dass**
für jede Komponente (2) Handlungsanweisungen (30) zur Verfügung gestellt werden, in welchen die einzelnen Handlungen, die für die Integration der Komponente (2) durchzuführen sind, Schritt für Schritt beschrieben sind.

5. Verfahren nach wenigstens einem der vorangegangenen Ansprüche,
**dadurch gekennzeichnet, dass**
die Integration der bearbeiteten Komponente (2) in die Steuerungseinrichtung (10) automatisch oder manuell erfolgt.

6. Verfahren nach wenigstens einem der vorangegangenen Ansprüche,
**dadurch gekennzeichnet, dass**
die Handlungsanweisungen (30) mittels einer weiteren Datenbank zur Verfügung gestellt werden.

## Claims

1. Method for programming a control means (10) for a machine, comprising the steps of:
- Acquiring a component (2) necessary for programming the control means (10), wherein said component (2) is retrieved from a data pool (4);
- Archiving the component (2) in a storage means (6);
- Editing the component (2);
- Integrating the edited component (2) in the control means (10);
**characterized in that**
the component (2) is retrieved via the Internet from a data pool (4) and, for the integration of the component (2) in an existing project (21) which comprises programs (23) and data (25), to the user is outputted at least one characteristic activity instruction (30) which is archived for the component (2) and in which the steps are represented which are to be performed by the user for integrating the component (2), wherein also the activity instruction (30) is retrievable via the Internet,
that the component (2) is transmitted to the control means (10) after an integration into the project (21) was effected,
that suitable auxiliary programs in the form of scripts (9) are provided for the user for editing the component (2), and
that in the at least one activity instruction (30) are integrated links to the scripts (9), with which the scripts (9) are startable and therewith the step to be performed by the user are executable automatically.

2. Method according to claim 1,
**characterized in that**
the scripts (9) are archived for the component (2) as auxiliary programs, in addition to the at least one activity instruction (30), and are outputted together with the component (2), wherein the scripts (9) perform the activity steps of the activity instructions (30) automatically.

3. Method according to claim 1 or 2,
**characterized in that**
the component (2) transfers a manual input of a user in at least one control command for the machine.

4. Method according to one of the preceding claims,
**characterized in that**
activity instructions (30) in which the individual activities to be performed for the integration of the component (2) are described step by step are provided for each component (2).

5. Method according to one of the preceding claims
**characterized in that**
the integration of the edited component (2) into the control means (10) is effected automatically or manually.

6. Method according to one of the preceding claims,
**characterized in that**
the activity instructions (30) are provided via a further database.

## Revendications

1. Procédé pour programmer des moyens de commande (10) pour une machine, comprenant les étapes :
- d'acquisition d'un composant (2) nécessaire pour programmer les moyens de commande (10), dans lequel ledit composant (2) est récupéré dans un groupe de données (4) ;
- d'archivage du composant (2) dans des moyens de mémorisation (6) ;
- d'édition du composant (2) ;
- d'intégration du composant (2) édité dans les moyens de commande (10) ;
**caractérisé en ce que**
le composant (2) est récupéré par l'intermédiaire d'Internet dans un groupe de données (4) et, pour l'intégration du composant (2) dans un projet (21) existant qui comprend des programmes (23) et des données (25), au moins une instruction d'activité caractéristique (30), qui est archivée pour le composant (2) et dans laquelle les étapes qui doivent être effectuées par l'utilisateur pour intégrer le composant (2) sont représentées, est délivrée à l'utilisateur, dans lequel l'instruction d'activité (30) peut également être récupérée par l'intermédiaire d'Internet,
**en ce que** le composant (2) est transmis aux moyens de commande (10) après qu'une intégration dans le projet (21) a été effectuée,
**en ce que** des programmes auxiliaires appropriés sous la forme de scripts (9) sont prévus pour que l'utilisateur édite le composant (2), et
**en ce que**, dans ladite au moins une instruction d'activité (30), des liens sont intégrés aux scripts (9), avec lesquels les scripts (9) peuvent être débutés et avec ceux-ci l'étape à effectuer par l'utilisateur peut être exécutée automatiquement.

2. Procédé selon la revendication 1,
**caractérisé en ce que**
les scripts (9) sont archivés pour le composant (2) en tant que programmes auxiliaires, en plus de ladite au moins une instruction d'activité (30), et sont délivrés avec le composant (2), dans lequel les scripts (9) effectuent les étapes d'activité des instructions d'activité (30) automatiquement.

3. Procédé selon la revendication 1 ou 2,
**caractérisé en ce que**
le composant (2) transfère une entrée manuelle d'un utilisateur dans au moins une commande de contrôle pour la machine.

4. Procédé selon l'une des revendications précédentes,
**caractérisé en ce que**
les instructions d'activité (30), dans lesquelles les activités individuelles à effectuer pour l'intégration du composant (2) sont décrites étape par étape, sont fournies pour chaque composant (2).

5. Procédé selon l'une des revendications précédentes
**caractérisé en ce que**
l'intégration du composant (2) édité dans les moyens de commande (10) est effectuée automatiquement ou manuellement.

6. Procédé selon l'une des revendications précédentes,
**caractérisé en ce que**
les instructions d'activité (30) sont fournies par l'intermédiaire d'une base de données supplémentaire.
